# EUROPÄISCHE PATENTSCHRIFT

(11) **EP 1 830 426 B1**
(45) Veröffentlichungstag und Bekanntmachung des Hinweises auf die Patenterteilung: **22.04.2009**
(21) Anmeldenummer: 07003520.9
(22) Anmeldetag: 21.02.2007
(51) Int. Cl.: H01M 8/02

(54) **Bipolarplatte, insbesondere für einen Brennstoffzellenstapel eines Fahrzeugs**
Bipolar plate, in particular for the fuel cell pack of a vehicle
Plaque bipolaire, en particulier pour un empilement de cellules de combustible d'un véhicule automobile

(30) Priorität: 01.03.2006 DE 102006009844
(43) Veröffentlichungstag der Anmeldung: 05.09.2007
(73) Patentinhaber: Behr GmbH & Co. KG, 70469 Stuttgart (DE)
(72) Erfinder: Kaiser, Wolfram, Dr.-Ing., 70437 Stuttgart (DE)

(56) Entgegenhaltungen:
- WO-A-01/48852
- WO-A-03/092107
- US-A- 6 099 984
- US-A1- 2005 058 864
- US-A1- 2005 095 494

## Beschreibung

Die Erfindung betrifft eine Bipolarplatte, insbesondere für einen Brennstoffzellenstapel eines Fahrzeugs.

Die Umwandlung von chemischer in elektrische Energie mittels Brennstoffzellen stellt eine effiziente und umweltfreundliche Methode zur Gewinnung von elektrischem Strom aus den Elementen Wasserstoff und Sauerstoff dar. Dabei finden üblicherweise zwei räumlich getrennte Elektrodenreaktionen statt, bei denen Elektronen freigesetzt beziehungsweise gebunden werden. Die Reaktanden Sauerstoff und Wasserstoff können in Form verschiedener Fluide bereitgestellt werden, sie müssen nicht zwingend in reiner Form vorliegen. Die Verwendung von reinem, molekularem Sauerstoff und Wasserstoff ist beispielsweise ebenso möglich wie die Verwendung von Luftsauerstoff und Methan. Ein erstes Beispiel für zwei korrespondierende Elektrodenreaktionen in einer Polymerelektrolytbrennstoffzelle (PEMFC oder kurz PEM-Brennstoffzelle genannt) sind folgende Reaktionen:

H₂ => 2H⁺ + 2e⁻ (Anodische Reaktion)

2H⁺ + 2e⁻ + ½O₂ => H₂O (Kathodische Reaktion)

Die Art der Reaktion hängt von der Bauart der Brennstoffzelle und von den verwendeten Fluiden ab. Bei einer Festoxid-Brennstoffzelle (kurz SOFC genannt) können beispielsweise folgende Reaktionen beobachtet werden:

H₂ + O₂⁻ => H₂O + 2e⁻ (Anodische Reaktion I)

CO + O₂⁻ => CO₂ + 2e⁻ (Anodische Reaktion II)

O₂ + 4e⁻ => 2O₂⁻ (Kathodische Reaktion)

Andere Brennstoffzellentypen weisen zum Teil andere Reaktionen auf Allen Brennstoffzellen gemein sind einerseits der Transport einer Ionenart durch einen Elektrolyten und andererseits der parallel verlaufende Transport von Elektronen durch einen äußeren Leiter, um die Ionen nach dem Transportvorgang in einen elektrisch neutralen Zustand zurückzuversetzen.

Durch elektrische Verbindung der räumlich getrennten Reaktionszonen kann ein Teil der dabei umgesetzten Reaktionsenthalpie direkt als elektrischer Strom gewonnen werden. Üblicherweise werden mehrere elektrisch in Serie geschaltete Brennstoffzellen aufeinander gestapelt und ein solchermaßen gebildeter Stapel als Stromquelle verwendet.

Eine einzelne Brennstoffzelle besteht dabei aus einer Elektrolyteinheit wie einer Membran sowie aus zwei mit Katalysatormaterial belegten Elektroden. Die Membran befindet sich trennend zwischen den Reaktanden, insbesondere Wasserstoff und Sauerstoff bei einer PEM-Brennstoffzelle bzw. Wasserstoff/Kohlenmonoxid und Sauerstoff bei einer Festoxid-Brennstoffzelle, und weist eine lonenleitfähigkeit auf, beispielsweise eine H⁺-Protonenleitfähigkeit bei einer PEM-Brennstoffzelle oder eine O₂-Leitfähigkeit bei einer Festoxid-Brennstoffzelle. Die Elektroden sind unter anderem zum Abgriff des von der Brennstoffzelle erzeugten elektrischen Stroms erforderlich.

Die Fluide (auch Reaktanden, Reaktionsmediume oder Arbeitsfluide genannt), beispielsweise Wasserstoff und Sauerstoff, und das Reaktionsprodukt Wasser sowie gegebenenfalls ein Fluid (auch Temperier- oder Kühlfluid genannt), das zur Abführung von überschüssiger Reaktionswärme dient, strömen durch Fluidkanäle in die Bereiche der Reaktionszonen hinein und aus ihnen hinaus. Insbesondere bei Verwendung eines wärmeabführenden Fluids wird durch eine thermische Verbindung der jeweiligen Fluidkanäle für einen ausreichenden Wärmeübertrag zwischen den jeweiligen Fluiden gesorgt. Ein Kanalsystem von Fluidkanälen für ein bestimmtes Fluid wird allgemein auch als Flowfield oder Strömungsfeld bezeichnet.

Es ist bekannt, die in einer Brennstoffzelle entstehende Abwärme zumindest teilweise über ein Temperierfluid, das durch ein separates Kühlkanalsystem strömt, abzuführen. Da die Temperaturdifferenz zwischen Brennstoffzelle und Umgebung wesentlich geringer ist als bei einem Verbrennungsmotor vergleichbarer Leistung, ist der Kühlungsaufwand bzw. die Kühlergröße trotz höheren Wirkungsgrades in der Regel größer.

Grundsätzlich unterscheidet man luftgekühlte und flüssigkeitsgekühlte Brennstoffzellenstacks oder -stapel. Luftgekühlte Brennstoffzellenstacks sind dadurch gekennzeichnet, dass der Wärmehaushalt der Brennstoffzelle durch Integration von geeigneten Kühlkanälen in die Bipolarplatten des Stacks und Durchströmung dieser Kanäle mit einem Luftstrom kontrolliert und die überschüssige Abwärme mit diesem Luftstrom abgeführt wird.

Flüssigkeitsgekühlte Brennstoffzellenstacks werden hingegen von einem flüssigen Kühlmedium von zumeist hoher Wärmekapazität durchflossen, das die beim Brennstoffzellenprozess entstehende Abwärme aufnimmt und in einem externen, geometrisch vom Stack getrennten Kühler, der seinerseits meist luftgekühlt ist, an die Umgebung abgibt. Aufgrund der physikalischen Eigenschaften des Wärmeübertragungsprozesses, der spezifischen Wärmekapazitäten der beteiligten Medien und der lokalen Wärmeübergangskoeffizienten können flüssigkeitsgekühlte Bipolarplatten bei vorgegebenem Temperaturgradienten im Bauteil deutlich kompakter ausgeführt werden als luftgekühlte Bipolarplatten.

Es sind Brennstoffzellenstapel bekannt, bei denen Kühlkanalsystem und Kathodenkanalsystem vollständig voneinander getrennt sind. Beispielsweise beschreibt die DE 100 15 360 A1 eine Bipolarplatte für Brennstoffzellen, die aus zwei geprägten Platten besteht. Eine Fläche der geprägten Platten weist jeweils eine positive Kanalstruktur auf und eine andere Fläche weist eine korrespondierende negative Kanalstruktur auf. Durch Verbinden beider Platten ergibt sich ein platteninneres Kanalsystem (auch Strömungsfeld genannt) für ein Kühlmittel und an den Außenflächen jeder Platte ein Kanalsystem für Gasströme.

Zur Leistungssteigerung bzw. zur Steigerung des Brennstoffzellenwirkungsgrades ist aus der DE 103 46 594 A1 ein Verfahren bekannt, durch das dem bereits teilweise abgereicherten und gegebenenfalls mit Produktwasser aufgesättigtem Reaktionsgas bzw. den Reaktionsgasen frisches Reaktionsgas an verschiedenen so genannten "Einspritzstellen" entlang der Lauflänge des Reaktionsmediums im Strömungsfeld zugeführt wird, was zu einer erheblichen Verbesserung der Spannungs-Strom-Kennlinie bzw. zu einer deutlichen Verbesserung des Brennstoffzellenwirkungsgrades führt.

Aus der älteren Anmeldung mit dem Aktenzeichen 10 2005 048 452 ist eine vierflutige Bipolarplatte bekannt, bei der neben den Strömungsfeldem für die Reaktionsmedien zwei weitere Strömungsfelder vorhanden sind, die gegebenenfalls zur Kühlung oder zur Zuführung frischer Reaktionsgase über Stichbohrungen zwischen zwei Strömungsfeldern genutzt werden können. Die dort vorgeschlagene Bipolarplatte ist allerdings sehr voluminös und basiert auf vier zu verarbeitende Blechteile.

Des Weiteren ist aus der US 6,099,984 eine mehrflutige Bipolarplatte bekannt, bei der äußere Strömungsfelder für Reaktionsmedien durch mehrere innere Strömungsfelder für ein Kühlmedium gekühlt werden.

Der Erfindung liegt daher die Aufgabe zugrunde, eine gegenüber dem Stand der Technik verbesserte Bipolarplatte mit einem möglichst geringen Platzbedarf und einem guten Wirkungsgrad anzugeben.

Hinsichtlich der Bipolarplatte wird die Aufgabe erfindungsgemäß gelöst durch die Merkmale des Anspruchs 1.

Vorteilhafte Weiterbildungen sind Gegenstand der Unteransprüche.

Erfindungsgemäß ist eine Bipolarplatte für einen Brennstoffzellenstapel zusammengesetzt aus zwei äußeren Formteilen und einem zwischen diesen angeordneten inneren Formteil, wobei die Formteile derart miteinander gefügt sind, dass zwei äußere Strömungsfelder und mindestens zwei innere Strömungsfelder gebildet sind, wobei die inneren Strömungsfelder mediendicht voneinander getrennt sind und mindestens eines der inneren Strömungsfelder mit einem der äußeren Strömungsfelder für ein Reaktionsmedium verbunden ist und das andere innere Strömungsfeld für ein Kühlmedium ein- oder beidseitig des inneren Formteils ausgebildet ist Eine derartige lediglich drei Formteile umfassende Bipolarplatte mit mindestens zwei inneren Strömungsfeldern, von denen ein Strömungsfeld mit einem äußeren Strömungsfeld verbindbar ist ermöglicht einen einfach zu fertigenden kompakten Aufbau für eine kühlbare Bipolarplatte mit lokalen Zudosierungen für äußere Strömungsfelder über mindestens ein inneres Strömungsfeld. Unter einem Formteil wird insbesondere ein ebenes Bauteil mit oder ohne Ausnehmungen, ein strukturiertes Bauteil mit Strukturen und/oder Ausnehmungen oder ein jegliches Bauteil mit vorgegebenen Abmessungen verstanden.

Zweckmäßigerweise sind mindestens zwei Zuführungen und zwei korrespondierende Abführungen für die voneinander getrennten, inneren Strömungsfeldern vorgesehen, wobei für das mit einem der äußeren Strömungsfeldern verbundene innere Strömungsfeld entlang des Strömungsweges im betreffenden äußeren Formteil mehrere Durchbrüche, insbesondere Stichbohrungen aufweist, die gleichzeitig als Abführungen dienen. Die Stichbohrungen dienen in einfacher Art und Weise als lokale Zudosierungen, beispielsweise von Frischluft in einen bereits teilweise abgereicherten Kathodengasstrom auf dem äußeren kathodenseitigen Formteil. Das andere, innere Strömungsfeld führt insbesondere ein Kühlmedium und dient dem Abtransport von Abwärme des anderen äußeren Strömungsfelds, beispielsweise des Anodengasstromes im äußeren anodenseitigen Formteil. In einer anderen Ausführungsform erfolgt bei einer anodenseitigen Anordnung der Stichbohrungen im anodenseitigen äußeren Formteil eine lokale Zudosierung von wasserstoffhaltigem Gas in einen bereits teilweise abgereicherten Anodengasstrom. Das andere kathodenseitige Strömungsfeld wird in analoger Weise vom inneren Kühlströmungsfeld gekühlt.

Die Form und Größe der Durchbrüche richtet sich nach der Menge der Zudosierung für das betreffende äußere Strömungsfeld. Dabei sind diese der Zudosierung dienenden Durchbrüche in Form von kleinen Stich- oder Durchgangsbohrungen für eine sprüh- oder düsenförmige Zuführung des betreffenden Mediums ausgeführt. Auch können die Durchbrüche als Schlitze oder Löcher ausgebildet sein.

Vorteilhafterweise sind zumindest zwei Zuführungen zur Zuführung von Reaktionsmedien, insbesondere von Wasserstoff und Luft, und zwei korrespondierende Abführungen zum Abführen der Reaktionsmedien, insbesondere Wasserstoff und Luft, vorgesehen. Darüber hinaus sind für die Anzahl der inneren Strömungsfelder eine entsprechende Anzahl von weiteren Zu- und Abführungen (auch Zu- und Abführungsports genannt) vorgesehen. Neben den strömungseingangs- und strömungsausgangsseitig vorgesehenen Zu-und Abführungen für die inneren Strömungsfelder können darüber hinaus entlang des Strömungsweges weitere Abführungen, beispielsweise in Form von Durchgangsbohrungen vorgesehen sein, die in einfacher Art und Weise eine Zudosierung eines Reaktionsmediums zum äußeren Strömungsfeld des betreffenden Reaktionsmediums ermöglichen. Je nach Aufbau der Bipolarplatte kann bei einem für eine Zudosierung vorgesehenen inneren Strömungsfeld die Abführung entfallen, indem die Durchgangsbohrungen für die Zudosierung als Abführungen dienen.

In einer möglichen Ausführungsform sind die Formteile als geprägte Metallteile ausgebildet, wobei die Prägung der äußeren Formteile an der jeweiligen Außenseite ein zugehöriges äußeres Strömungsfeld für Reaktionsmedien bilden und die jeweiligen Negative der äußeren Strömungsfelder die inneren Strömungsfelder bilden, welche durch das innere Formteil voneinander getrennt sind. Zweckmäßigerweise sind zumindest die äußeren Formteile mit Nuten versehen, die eine Breite von 0,5 mm bis 3 mm, besonders bevorzugt von 0,8 mm bis 2 mm und eine Tiefe von 0,1 mm bis 2 mm, besonders bevorzugt 0,1 mm bis 0,8 mm aufweisen. Dabei sind die äußeren Strömungskanäle der äußeren Strömungsfelder durch diese Nuten gebildet, die auf verschiedenen Wegen die jeweilige Zuführung und Abführung verbinden. Auch kann jede andere strukturelle Prägeform zur Bildung eines Strömungskanals vorgesehen sein. Die nutenförmige Ausprägung des Formteils, insbesondere eines Metallblechs ist in der Herstellung besonders einfach und kostengünstig. Darüber hinaus bilden die Nuten auf der einen Seite des Metallblechs auf der anderen Seite des Metallblechs Stege, zu welchen links und rechts wiederum Nuten verlaufen, die als Strömungskanäle für ein anderes Strömungsfeld dienen. Mit anderen Worten: Die inneren Strömungskanäle der inneren Strömungsfelder sind durch Stege im äußeren Formteil gebildet, die links und rechts von der äußeren Nut im äußeren Formteil verlaufen.

In einer bevorzugten Ausführungsform für einen möglichst gute Wärmeübertragung und eine homogene Temperaturverteilung verlaufen die inneren Strömungskanäle mäanderförmig. Beispielsweise verlaufen erste innere Strömungskanäle eines ersten inneren Strömungsfeldes für ein Reaktionsmedium in einem ersten Mäandermuster und zweite Strömungskanäle dieses oder eines anderen inneren Strömungsfeldes in einem zweiten, entgegen gesetzt orientierten Mäandermuster.

Je nach Vorgabe sind beidseitig des inneren Formteils jeweils zumindest ein oder mehrere, insbesondere zwei oder drei Strömungsfelder ausgebildet. Beispielsweise dienen zwei innere Strömungsfelder der anodenseitigen und kathodenseitigen Zudosierung zum jeweiligen Reaktionsmedium und ein drittes inneres, ein- oder beidseitig des inneren Formteils verlaufendes Strömungsfeld der Kühlung und Abführung von Wärme. In einer weiteren Ausführungsform kann die Anzahl der inneren Strömungsfelder maximal der doppelten Anzahl der Stege und zwei äußeren Randkanälen (= linker und rechter Randkanal) entsprechen. Auch können zwei weitere Randkanäle, die um die inneren Strömungsfelder verlaufen, als zwei zusätzliche Strömungsfelder verwendet werden. Dabei sind eine der Anzahl der inneren Strömungsfelder entsprechende Anzahl von Zuführungen und Abführungen vorgesehen.

Zur Ausbildung der verschiedenen inneren Strömungsfelder und deren Anzahl ist das innere Formteil verschiedenartig ausgeführt. Beispielsweise kann das innere Formteil als ein ebenes Metallblech ausgebildet sein, das die beidseitig angeordneten und durch die Prägung der äußeren Formteile gebildeten Strömungsfelder im Bereich der Strömungsfelder voneinander trennt. Im Bereich der Zu- und Abführungen (auch Portbereich genannt) sind die Strömungsfelder nach dem Prinzip der kommunizierenden Halbschalen miteinander verbunden. Das innere Formteil ist als ein Metallblech ausgebildet. Darüber hinaus kann das innere Formteil zumindest bereichsweise, insbesondere entlang des Strömungsweges mit Ausnehmungen versehen ist, die die beiden (inneren) Kühlströmungsfelder zumindest bereichsweise verbinden. Hierdurch kann der Druckverlust im Kühlströmungsfeld reduziert werden.

Zur Erhöhung der Anzahl bzw. der Form der inneren Strömungsfelder ist das innere Formteil vorzugsweise als ein geprägtes Metallblech ausgebildet. Bei einer Prägung von Nuten in das innere Formteil, wobei die Nuten korrespondieren mit den Nuten eines äußeren Formteils weisen bei einer Anordnung der Nuten des inneren Formteils zumindest teilweise in den Nuten des äußeren Formteils daraus resultierende, beidseitig des inneren Formteils gebildete Strömungsfelder unterschiedliche Strömungsquerschnitte auf.

Zum Zu- bzw. Abführen der Medien der verschiedenen inneren Strömungsfelder ist das innere Formteil zweckmäßigerweise mit mehreren Ausnehmungen versehen. Dabei können die Ausnehmungen als Schlitze, Löcher, Quadrate, Rechtecke ausgebildet sein. Insbesondere großflächige Ausnehmungen, wie Quadrate und Rechtecke dienen der strömungseingangsseitigen Zuführung bzw. der strömungsausgangsseitigen Abführung. Schlitze und Löcher dienen insbesondere der Verbindung eines beidseitig des inneren Formteils verlaufenden Strömungsfeldes.

Für eine möglichst hinreichend gute Reaktionsumsetzung sind für die äußeren Strömungsfelder, insbesondere für die Reaktionsmedien vorgesehene Zuführungen und/oder Abführungen randseitig und einander gegenüberliegend, insbesondere diagonal einander gegenüberliegend in den Formteilen angeordnet. Für die inneren Strömungsfelder, insbesondere für das Kühlmedium und/oder für mindestens ein Reaktionsmedium vorgesehene Zuführungen und/oder Abführungen sind innenseitig übereinander liegend in den Formteilen angeordnet.

Die mit der Erfindung erzielten Vorteile bestehen insbesondere darin, dass mit der erfindungsgemäßen Bipolarplatte mit mindestens zwei inneren Strömungsfeldern, von denen ein Strömungsfeld als Kühlströmungsfeld und das andere Strömungsfeld der Zudosierung dienen, eine kompakte und mit geringem Aufwand und variabel herstellbare Bipolarplatte für einen bipolaren Brennstoffzellenstapel ermöglicht ist. Durch die hohe Variabilität und die unterschiedlichen Formen, Anzahl sowie Strömungsquerschnitte der Strömungskanäle und der daraus resultierenden Strömungsfelder sind ein hoher Reaktionsumsatz und eine hohe Wärmeabfuhr sichergestellt.

Weitere vorteilhafte Ausführungsformen der Erfindung ergeben sich aus den Patentansprüchen sowie aus den Ausführungsbeispielen.

Die Ausführungsbeispiele der Erfindung werden nachfolgend anhand einer Zeichnung näher erläutert. Darin zeigen:
- Fig. 1: schematisch eine Bipolarplatte aus zwei äußeren Formteilen und einem inneren Formteil mit zwei inneren Strömungsfeldem in Explosionsdarstellung,
- Fig. 2: schematisch ein inneres Formteil in perspektivischer Darstellung gemäß Figur 1,
- Fig. 3A bis 3C: schematisch verschiedene Strukturformen für die drei gefügten Formteile einer Bipolarplatte,
- Fig. 4: schematisch eine Bipolarplatte mit drei aneinander gefügten Formteilen und zwei inneren Strömungsfeldern, von denen ein Strömungsfeld beidseitig des inneren Formteils angeordnet ist, in Explosionsdarstellung,
- Fig. 5: schematisch ein inneres Formteil für ein kathodenseitiges, inneres Zudosierungsströmungsfeld mit einer zugehörigen Zu- und Abführung,
- Fig. 6: schematisch ein äußeres Formteil mit einer Zuführung für das kathodenseitige, innere Zudosierungsströmungsfeld und ohne Abführung und ein inneres Kühlströmungsfeld ohne Zu- und Abführungsports,
- Fig. 7: schematisch ein äußeres Formteil mit einer Zuführung für ein kathodenseitiges, inneres Zudosierungsströmungsfeld und mit einer Abund Zuführung für ein Kühlströmungsfeld,
- Fig. 8: schematisch ein äußeres Formteil mit vier Zuführungen für vier Strömungsfelder,
- Fig. 9: schematisch ein äußeres Formteil mit vier Zuführungen für vier Strömungsfelder von der Anodenseite, und
- Fig. 10: schematisch vier Strömungsfelder, von denen jeweils zwei in einer Ebene liegen ohne das dazwischen angeordnete innere Formteil, wobei die in einer Ebene liegenden Strömungsfelder voneinander getrennt sind und zwei in verschiedenen Ebenen angeordnete Strömungsfelder miteinander verbunden und die anderen voneinander getrennt sind.

Einander entsprechende Teile sind in allen Figuren mit den gleichen Bezugszeichen versehen.

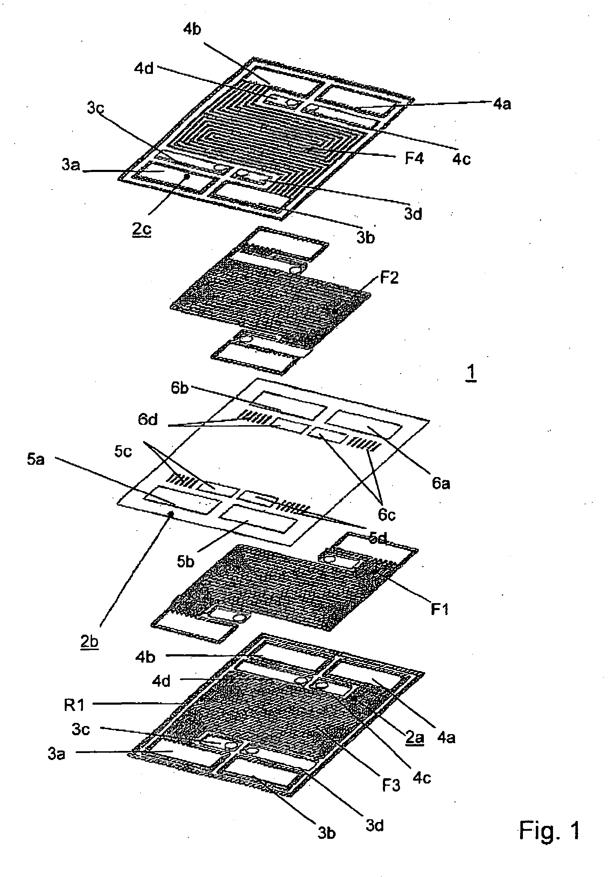

Figur 1 zeigt schematisch eine Bipolarplatte 1 für einen nicht näher dargestellten Brennstoffzellenstapel. Die Bipolarplatte 1 ist aus drei Formteilen 2a bis 2c mit zwei äußeren Formteilen 2a und 2c und einem inneren Formteil 2b gebildet in Explosionsdarstellung. Die beiden äußeren Formteile 2a, 2c sind so genannte korrespondierende Halbschalen und bilden ein Scheibenpaar. Die drei Formteile 2a bis 2c werden zu einem Scheibenpaket zusammengefügt, beispielsweise durch Schweißen, Löten oder mechanisches Umformen werden diese fluiddicht miteinander verbunden. Bevorzugt sind die Formteile 2a bis 2c als Metallbleche, insbesondere Edelstahlbleche gefertigt. Die Anordnung mehrerer derartiger Scheibenpakete zu einem Scheibenstapel bildet einen Brennstoffzellenstapel. Die Scheibenpakete werden dabei in nicht näher dargestellter Art und Weise abwechselnd mit Membranen, die beidseitig mit Elektroden versehen sind, aufeinander gestapelt.

Zwischen den jeweiligen Innenseiten der äußeren Formteile 2b und 2c und der zugehörigen äußeren Seite des inneren Formteils 2b sind jeweils ein Strömungsfeld F1 und F2 gebildet. Hierzu sind die äußeren Formteile 2a und 2c als geprägte Metallbleche ausgebildet, deren Prägung an der Außenseite jeweils ein Strömungsfeld F3 bzw. F4 für die beiden Reaktionsmedien, z. B. Wasserstoff und Sauerstoff bilden. Die Negativen der äußeren Strömungsfelder F3 und F4 bilden die inneren Strömungsfelder F1 und F2, die durch das innere Formteil 2b, z. B. ein ebenes Zwischenblech mediendicht zumindest im Bereich der Strömungsfelder F1 und F2 voneinander getrennt sind.

Als Prägung oder Struktur weisen die Formteile 2a und 2c Nuten auf, die die Strömungskanäle der äußeren Strömungsfelder F3 und F4 bilden. Die Nuten verlaufen im Wesentlichen parallel zueinander in Längs- und Querrichtung der Formteile 2a und 2c und verbinden Zuführungen 3a bis 3d mit zugehörigen Abführungen 4a bis 4d. Dabei liegen die Zuführungen 3a bis 3d und die zugehörigen Abführungen 4a bis 4d diagonal einander gegenüber.

Die Zuführungen 3a, 3b und die korrespondierenden Abführungen 4a, 4b für die Reaktionsmedien der äußeren Strömungsfelder F3 bzw. F4 sind randseitig als Ausnehmungen in die betreffenden Formteile 2a bis 2c eingebracht. Die Zuführungen 3c, 3d und die Abführungen 4c, 4d für die inneren Strömungsfelder F1 bzw. F2 sind innenseitig und ebenfalls diagonal einander gegenüberliegend angeordnet.

Das innere Formteil 2b weist mehrere zu den äußeren Zuführungen 3a bis 3d und Abführungen 4a bis 4d korrespondierende Ausnehmungen 5a bis 5d bzw. 6a bis 6d auf. Die Ausnehmungen 5a bis 5d bzw. 6a bis 6d dienen als Zu- bzw. Abführungen für die Medien der Strömungsfelder F1 bis F4 und weisen verschiedene Formen auf. Beispielsweise können sie schlitzförmig, eckig, rund ausgebildet sein. Die Form und Größe der Ausnehmungen 5a bis 5d, 6a bis 6d richtet sich nach dem vorgegebenen Strömungsquerschnitt und der zu erzielenden Strömungsmenge des betreffenden Mediums.

Auch kann das innere Formteil 2b mit einer zu den außen liegenden Strömungsfeldern F3 und F4 korrespondierenden Prägung versehen sein, um insbesondere einen Druckverlust für einen der innen liegenden Strömungsfelder F1 und F2 abzusenken.

Je nach Ausgestaltung der Prägung der Formteile 2a bis 2c können die umliegenden Ränder R1, R2 der Formteile 2a bzw. 2c zur Bildung weiterer Strömungsfelder F5, F6 genutzt werden. Für eine hinreichend gute mediendichte Verbindung der Formteile 2a bis 2c miteinander können darüber hinaus in den Rändern R1, R2 sowie um die Zuführungen 3a bis 3d und die Abführungen 4a bis 4d sowie die Ausnehmungen 5a bis 5d und 6a bis 6d Dichtungsnuten mit entsprechenden Dichtungsmitteln angeordnet sein.

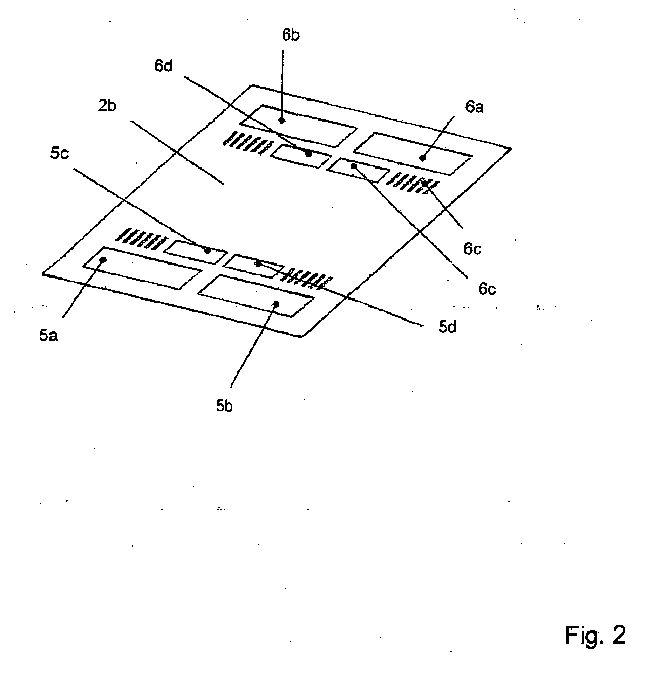

Figur 2 zeigt eine mögliche Ausführungsform für ein inneres Formteil 2b in perspektivischer Darstellung. Die Ausnehmungen 5a, 5b dienen als Eingangsports für die Reaktions- oder Betriebsmedien und die zugehörigen Ausnehmungen 6a bzw. 6b als Ausgangsports für die Reaktions- oder Betriebsmedien der äußeren Strömungsfelder F3 und F4. Die Ausnehmungen 5c, 5d und 6c, 6d dienen als Eingangs- bzw. Ausgangsports für die inneren Strömungsfelder F1 und F2 und sind verbunden mit den Zuführungen 3c, 3d bzw. Abführungen 4c, 4d der äußeren Formteile 2a, 2c. Die Ausnehmungen 5a bis 5d, 6a bis 6d können rechteckig, rund und/oder schlitzförmig ausgebildet sein. Die schlitzförmigen Ausnehmungen dienen insbesondere der Verbindung eines beidseitig, d.h. ober- und unterhalb des inneren Formteils 2b angeordneten Strömungsfeldes F1, F2. Alternativ kann das innere Strömungsfeld F1 oder F2 nur einseitig des inneren Formteils 2b angeordnet sein.

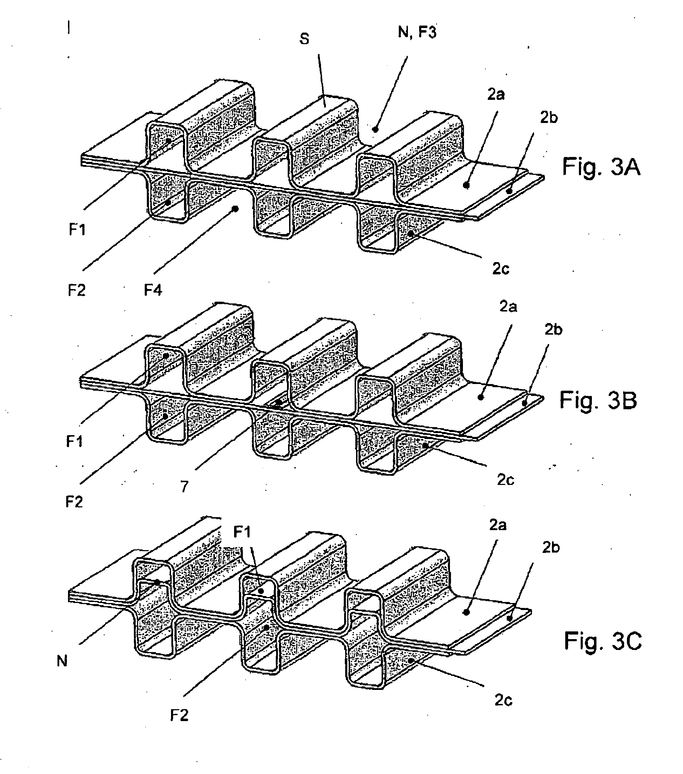

In den Figuren 3A bis 3C sind verschiedene Strukturformen für die drei gefügten Formteile 2a bis 2c einer Bipolarplatte 1 im Detail gezeigt.

In den Figuren 3A bis 3C weist das äußere obere Formteil 2a mehrere Nuten N auf, die beispielsweise kathodenseitig angeordnet sind und der Durchströmung dienen und ein kathodenseitiges äußeres Strömungsfeld F3 bilden. Das andere, anodenseitige äußere Formteil 2c weist ebenfalls mehrere Nuten N auf, die ein anodenseitiges äußeres Strömungsfeld F4 bilden. Zwischen den beiden äußeren Formteilen 2a, 2c ist ein mittleres Formteil 2b angeordnet. Die Form des inneren Formteils 2b ist in den Figuren 3A bis 3C verschieden.

In Figur 3A ist das innere Formteil 2b ein ebenes Metallblech. Die Nuten N der äußeren Formteile 2a und 2c liegen in Form von Stegen auf dem inneren Formteil 2b an und bilden links und rechts davon verlaufende Stege S, die als Strömungskanäle für die inneren Strömungsfelder F1 und F2 dienen, die ein- oder beidseitig des inneren Formteils 2b gebildet, von diesem getrennt und beispielsweise von einem Kühlmedium durchströmt werden. Diese Ausführungsform ist besonders einfach herstellbar. Beide Strömungsfelder F1 und F2 weisen den gleichen Strömungsquerschnitt auf.

In der Figur 3B ist das innere Formteil 2b im Bereich der Stege S entlang des Verlaufs der Stege S und des Strömungsweges der inneren Strömungsfelder F1, F2 mit Durchbrüchen 7 versehen, die das oberhalb angeordnete Strömungsfeld F1 oder F2 mit dem unterhalb angeordneten Strömungsfeld F1 bzw. F2 verbinden, so dass Druckverluste reduziert werden. Bei dieser Ausführungsform des bereichsweise durchbrochenen inneren Formteils 2b muss der Einströmbereich derart ausgebildet sein, dass die beiden Strömungsfelder F1 und F2 getrennt voneinander sind. Diese Ausführungsform ist besonders dann geeignet, wenn sich die Volumenströme, mit denen das obere bzw. das untere Strömungsfeld F1 und F2 von den äußeren zu kühlenden Strömungsfeldem F3 bzw. F4 beaufschlagt wird, stark unterscheiden. Dies führt zu einer optimalen Systemauslegung der Bipolarplatte 1 und des Brennstoffzellenstapels.

Die Figur 3C zeigt eine weitere Ausführungsform für ein inneres Formteil 2b, das wie die äußeren Formteile 2a und 2c geprägt, beispielsweise mit Nuten N versehen ist. Das innere Formteil 2b ist zumindest streckenweise geprägt, so dass sich zusammen mit den äußeren Formteilen 2a und 2c eine eierkartonähnliche Struktur ergibt. Hierdurch steigt der hydraulische Durchmesser des inneren Strömungsfelds F1 zu Lasten des inneren Strömungsfelds F2. Diese Ausführungsform ist insbesondere dann vorgesehen, wenn das Lastprofil der Brennstoffzelle im Hinblick auf die erforderlichen Volumenströme und auftretenden Druckverluste im Hinblick auf den Wirkungsgrad der Brennstoffzelle optimiert werden soll.

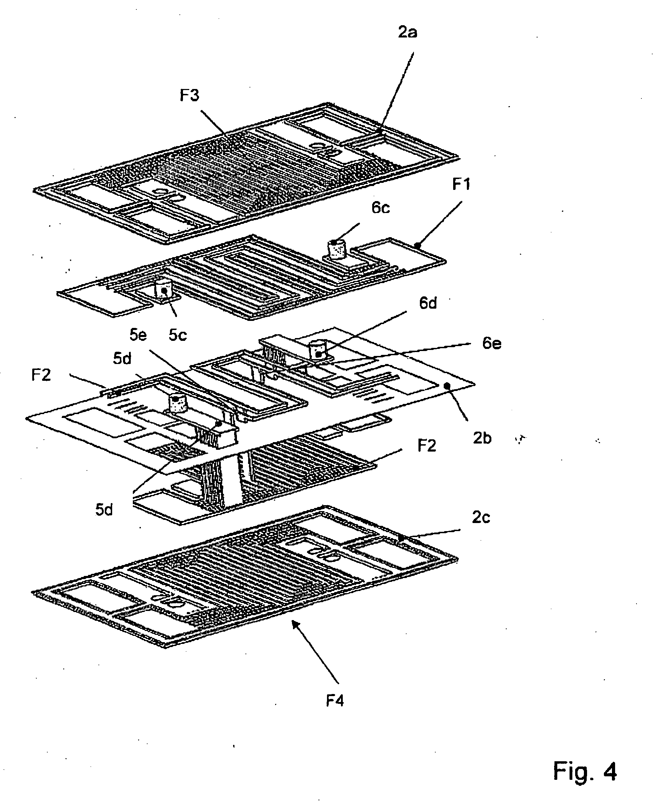

Figur 4 zeigt ein weiteres Ausführungsbeispiel für eine Bipolarplatte 1 mit drei aneinander gefügten Formteilen 2a bis 2c mit zwei inneren Strömungsfeldem F1 und F2, von denen das Strömungsfeld F2 beidseitig und das Strömungsfeld F1 einseitig des inneren Formteils 2b angeordnet ist. Im Detail ist das Formteil 2b derart mit Ausnehmungen 5e, 6e versehen, dass sich für das innere Strömungsfeld F2 bei einem vorgegebenen Medium, z. B. ein Kühlmedium, beispielsweise Frischluft, und vorgegebener Durchflussmenge ein geringerer Druckverlust ergibt als für das andere innere Strömungsfeld F1, das sich nur einseitig des Formteils 2b erstreckt. Hierzu werden über die Ausnehmungen 5e, 6e, von denen zwei (=5e) als Zuführungen und zwei als Abführungen (=6e) dienen, zwei Kanäle vom Strömungsfeld F2 auf die andere Seite des Formteils 2b abgezweigt.

Darüber hinaus kann das auf der oberen Seite des inneren Formteils 2b, angeordnete zusätzliche Strömungsfeld F1 zur Eindosierung von Frischluft in das außen liegende Strömungsfeld F3, z. B. einem Kathodengasströmungsfeld, genutzt werden. Hierzu sind in nicht näher dargestellter Art und Weise in dem äußeren Formteil 2a Durchbrüche oder Öffnungen, z. B. Stich- oder Durchgangsbohrungen, vorgesehen, die entlang des Strömungsweges des äußeren Strömungsfelds F3 im äußeren Formteil 2a verlaufen. Die Öffnungen sind dabei insbesondere im Bereich des Strömungsweges des bereits abgereicherten Kathodengasstroms angeordnet, so dass hier eine lokale Zudosierung mit Frischluft erfolgt.

Das auf der unteren Seite des inneren Formteils 2b verlaufende Strömungsfeld F2 dient der Kühlung des anderen außen liegenden Strömungsfeldes F4, z. B. dem Anodengasströmungsfeld.

Die Zu- und Abführungen 5d, 6d für das innere Strömungsfeld F2 bzw. 5c, 6c für das innere Strömungsfeld F1 verlaufen im Wesentlichen parallel zu den Zu- und Abführungen 3a, 4a und 3b, 4b der Reaktionsmedien.

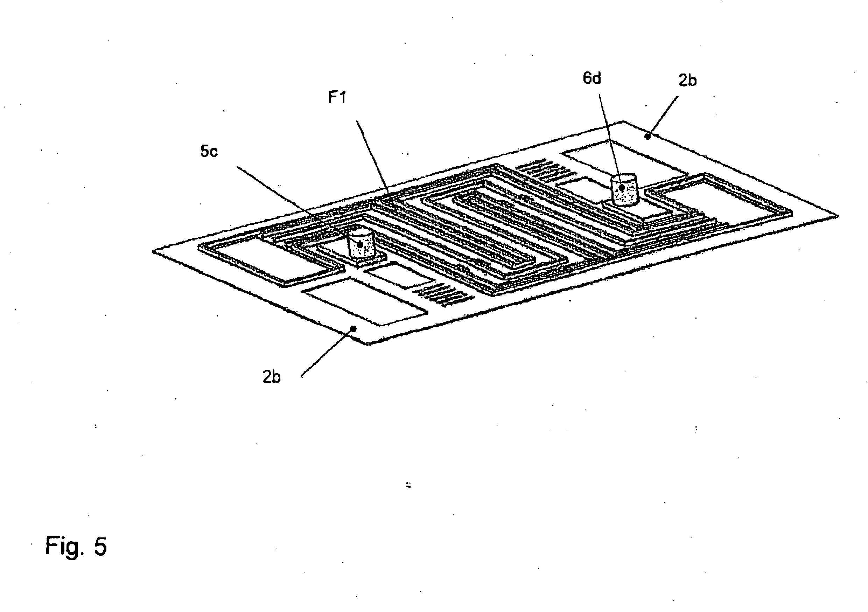

Die Figur 5 zeigt eine weitere Ausführungsform für ein inneres Strömungsfeld F1 des inneren Formteils 2b. Das innere Strömungsfeld F1 dient der kathodenseitigen Zudosierung des äußeren kathodenseitigen Strömungsfelds F3 und wird über die Zuführung 5c gespeist. In dieser Ausführungsform ist eine Abführung 6d vorgesehen. Alternativ kann diese entfallen, wenn genügend Durchbrüche in dem äußeren Formteil 2a zur Abführung und somit zur kathodenseitigen Zudosierung vorgesehen sind.

Zusätzlich zur ebenen Ausführung des inneren Formteils 2b kann dieses geprägt ausgeführt sein.

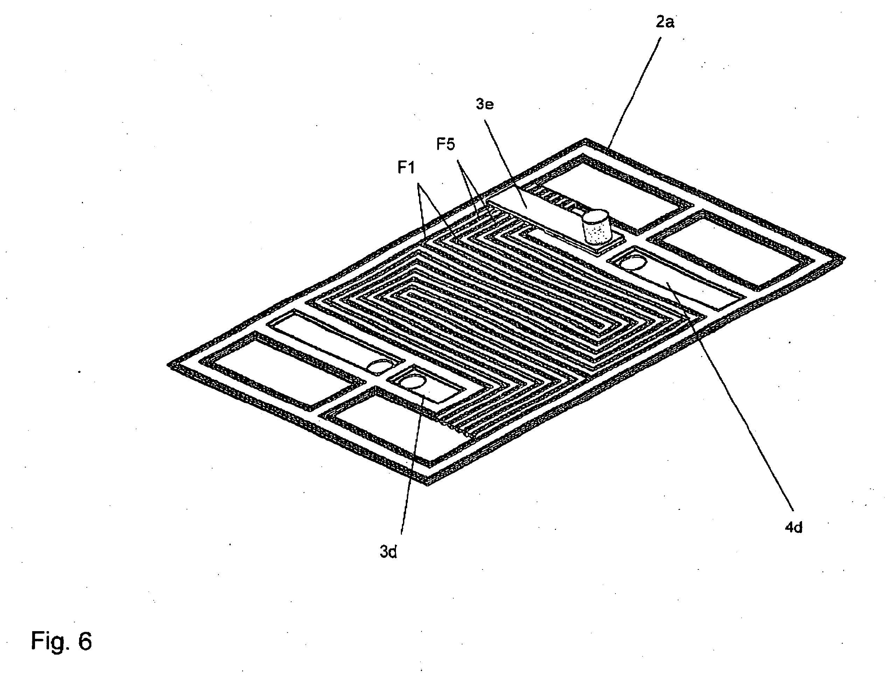

Figur 6 zeigt ein Beispiel für ein äußeres Formteil 2a mit einer weiteren Zuführung 3e für ein inneres, einer Zudosierung des kathodenseitigen Strömungsfeldes F3 dienendes Strömungsfeld F5. Mit anderen Worten: In diesem Ausführungsbeispiel sind auf der oberen Seite des inneren Formteils 2b zwei innere Strömungsfelder F1 und F5 angeordnet, wobei das Strömungsfeld F1 der Kühlung und ohne Zu- und Abführungsports der Zuführung 3d und Abführung 4d dargestellt ist. Das Strömungsfeld F5 dient der Zudosierung des nicht näher dargestellten, äußeren kathodenseitigen Strömungsfeldes F3. Die Zudosierung erfolgt wiederum über nicht näher dargestellte Durchgangsöffnungen im äußeren Formteil 2a. Die Kanäle der inneren Strömungsfelder F1 und F5 verlaufen im Wesentlichen parallel zueinander und abwechselnd.

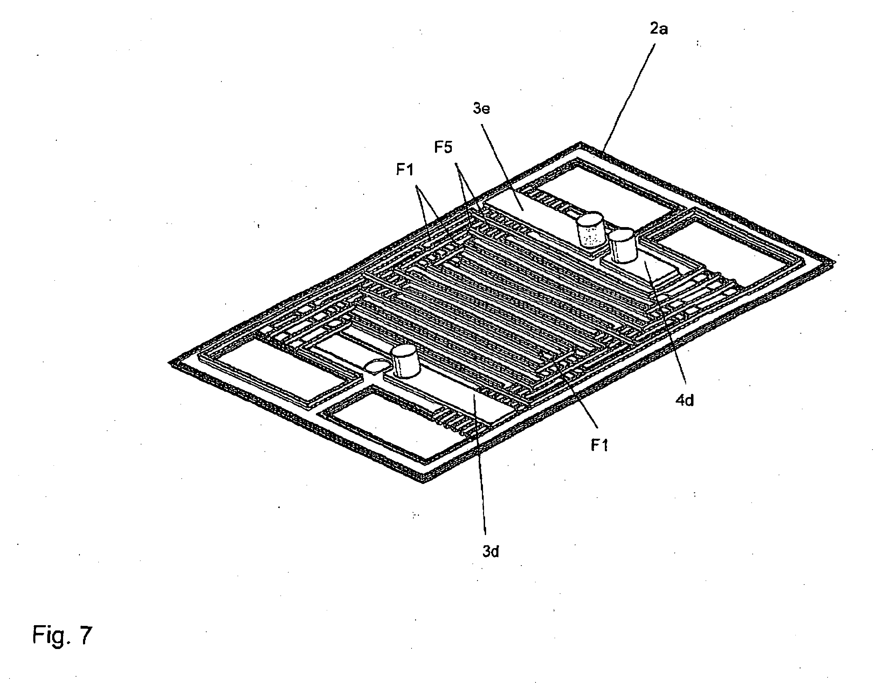

Figur 7 zeigt das äußere Formteil 2a mit einer kathodenseitigen Zuführung 3d und Abführung 4d für das als Kühlströmungsfeld dienende innere Strömungsfeld F1 und mit der Zuführung 3e für das innere kathodenseitige Strömungsfeldes F5, das über Durchgangsöffnungen der Zudosierung des äußeren Strömungsfeldes F3, z. B. mit Frischluft, dient. Die Abführung des inneren Strömungsfeldes F5 nach außen erfolgt ausschließlich über die für die Zudosierung vorgesehenen Durchgangsöffnungen.

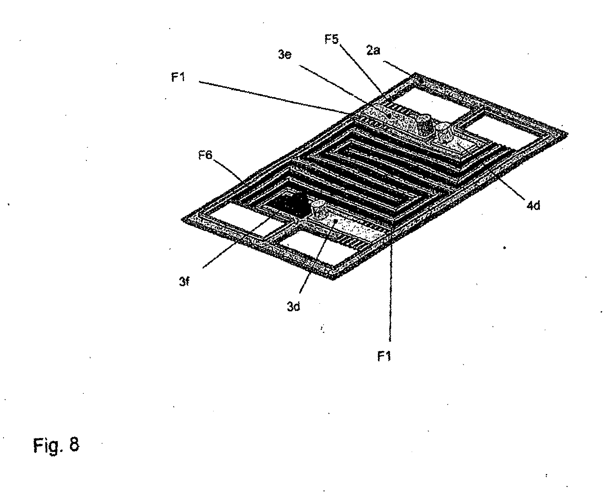

Figur 8 zeigt eine weitere Ausführungsform für ein äußeres Formteil 2a mit vier inneren Strömungsfeldern zweimal F1 (beidseitig des inneren Formteils 2b), F5, F6. Zusätzlich zu dem inneren Strömungsfelder F1, das zur beidseitigen Kühlung (d.h. anoden- und kathodenseitigen Kühlung) beidseitig des inneren Formteils 2b angeordnet ist, sind für eine kathodenseitige Zudosierung das innere Strömungsfeld F5 auf der einen Seite des inneren Formteils 2b und für eine anodenseitige Zudosierung das innere Strömungsfeld F6 auf der anderen Seite des inneren Formteils 2b angeordnet. In dieser Zeichnung ist das innere Formteil 2b nicht näher dargestellt. Für das anodenseitige Zudosierungsströmungsfeld F6 ist ein weitere Zuführung 3f vorgesehen, über welche für eine lokale Zudosierung von wasserstoffhaltigem Gas erfolgt. Über Stichbohrungen in dem äußeren anodenseitigen Formteil 2c erfolgt insbesondere im Bereich des teilweise abgereicherten Anodengasstrom eine gezielte Zudosierung mit wasserstoffhaltigem Gas. Die Stichbohrungen sind entlang der Anodenmedienlauflänge in das nicht näher dargestellte Formteil 2c eingebracht. Für das kathodenseitige Zudosierungsströmungsfeld F5 ist die Zuführung 3e vorgesehen. Beide Zudosierungsströmungsfelder F5 und F6 weisen keine separate Abführung auf. Die Abführung erfolgt über die Stichbohrungen für die Zudosierung. Je nach Vorgabe kann aber auch eine separate Abführung vorgesehen sein.

Je nach Vorgabe kann die Bipolarplatte 1 mit ein, zwei oder mehreren inneren Strömungsfeldern F1, F2, F5 und/oder F6 ausgebildet sein. Hierdurch kann sowohl ein- oder beidseitig der Trennplatte oder des inneren Formteils 2b gekühlt als auch anoden- und/oder kathodenseitig Frischgas zudosiert werden. Dabei kann die Zudosierung mit frischen Reaktionsmedien durch gleichzeitige Versorgung beider Strömungsfelder F5 und F6 erfolgen.

In einer möglichen Ausführungsform kann die Abwärme durch beispielsweise alternierenden Einsatz von fluidgekühlten Bipolarplatten gemäß dem Stand der Technik und durch erfindungsgemäße Bipolarplatten 1 andererseits realisiert werden. Für diesen Fall werden in der erfindungsgemäßen Bipolarplatte 1 zusätzliche Durchgangsports für die fluidgekühlten Platten bereitgestellt.

Vorzugsweise kann die Zudosierung eines frischen Reaktionsmediums über eines der inneren Strömungsfelder F5 bzw. F6 permanent erfolgen. Dabei wird der Abführungsport verschlossen. Zu Spülzwecken kann der Ausgangsport oder Abführungsport zeitweise geöffnet werden.

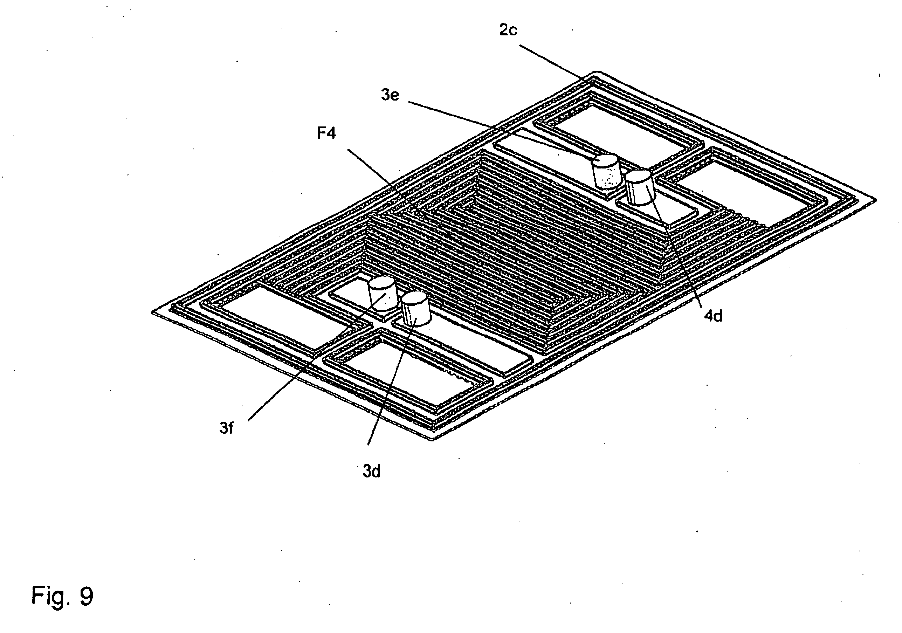

Figur 9 zeigt eine Ausführungsform für ein anodenseitiges äußeres Formteil 2c mit drei Zuführungen 3e, 3f, 3d für die kathodenseitige Zudosierung, die anodenseitige Zudosierung bzw. die Zuführung von Kühlmedium und einer Abführung 4d zum Abführen des Kühlmediums.

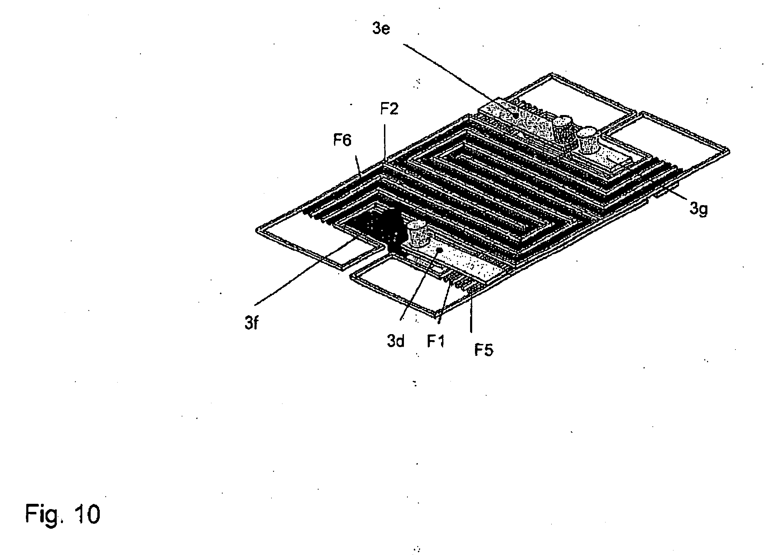

Figur 10 zeigt eine Ausführungsform für vier innere Strömungsfelder F1, F2, F5 und F6 mit den zugehörigen Zuführungen 3d bis 3g ohne Darstellung der Formteile 2a bis 2c von der Anodenseite gesehen. Die inneren Strömungsfelder F1 und F2 dienen der Kühlung. Das innere Strömungsfeld F1 dient der kathodenseitigen Kühlung und ist mit dem Strömungsfeld F5 zur kathodenseitigen Zudosierung in einer Ebene angeordnet. Das innere Strömungsfeld F2 dient der anodenseitigen Kühlung und ist mit dem Strömungsfeld F6 zur anodenseitigen Zudosierung in einer Ebene angeordnet. Die beiden Ebenen sind im Aufbau durch das innere Formteil 2b mediendicht im Bereich der Strömungsfelder F1, F2, F5 und F6 voneinander getrennt.

Die beiden Strömungsfelder F1 und F2 können über einen gemeinsamen Zu- und Abführungsport mit Kühlmedium versorgt werden. D.h. im Bereich der Ports sind die Kühlströmungsfelder F1 und F2 für eine beidseitige Anordnung am inneren Formteil 2b miteinander verbunden. Auch können diese über separate Ports gespeist werden.

Die Strömungsfelder F5 und F6 sind zur kathodenseitigen bzw. anodenseitigen Zudosierung vorgesehen. Diese liegen übereinander und sind durch ein Formteil 2b voneinander getrennt.

Die Strömungsfelder F1 und F2 sind zur kathodenseitigen bzw. anodenseitigen Kühlung vorgesehen. Diese liegen übereinander und sind durch ein Formteil 2b voneinander getrennt und nur über die Ports miteinander verbunden.

Es können auch weitere innere Strömungsfelder zur Zudosierung oder Kühlung vorgesehen sein, entsprechend erhöht sich mit der Anzahl der Strömungsfelder auch die Anzahl der Zu- und Abführungen.

## Patentansprüche

1. Bipolarplatte (1) für einen Brennstoffzellenstapel, die zusammengesetzt ist aus zwei äußeren Formteilen (2a, 2c) und einem zwischen diesen angeordneten inneren Formteil (2b), wobei die Formteile (2a bis 2c) derart miteinander gefügt sind, dass zwei äußere Strömungsfelder (F3, F4) und mindestens zwei innere Strömungsfelder (F1 oder F2, F5, F6) gebildet sind, wobei die inneren Strömungsfelder (F1 oder F2, F5, F6) mediendicht voneinander getrennt sind und mindestens eines der inneren Strömungsfelder (F5, F6) mit einem der äußeren Strömungsfelder (F3, F4) für ein Reaktionsmedium verbunden ist und das andere innere Strömungsfeld (F1 oder F2) für ein Kühlmedium ein- oder beidseitig des inneren Formteils (2b) ausgebildet ist.

2. Bipolarplatte (1) nach Anspruch 1, **dadurch gekennzeichnet, dass** mindestens zwei Zuführungen (3b bis 3g) und zwei korrespondierende Abführungen (4b bis 4g) für die voneinander getrennten, inneren Strömungsfeldern vorgesehen sind, wobei das mit einem der äußeren Strömungsfeldem (F3, F4) verbundene innere Strömungsfeld (F5, F6) entlang des Strömungswege mehrere. Durchbrüche, insbesondere Stichbohrungen aufweist.

3. Bipolarplatte (1) nach Anspruch 1 oder 2, **dadurch gekennzeichnet, dass** zwei Zuführungen zur Zuführung (3a, 3b) von Reaktionsmedien, insbesondere von Wasserstoff und Luft, und zwei korrespondierende Abführungen (4a, 4b) zum Abführen der Reaktionsmedien, insbesondere Wasserstoff und Luft, vorgesehen sind.

4. Bipolarplatte (1) nach einem der vorhergehenden Ansprüche, **dadurch gekennzeichnet, dass** die Formteile (2a bis 2c) als geprägte Metallteile ausgebildet sind, wobei die Prägung der äußeren Formteile (2a, 2c) an der jeweiligen Außenseite ein zugehöriges äußeres Strömungsfeld (F3, F4) für Reaktionsmedien bilden und die jeweiligen Negative der äußeren Strömungsfelder (F3, F4) die inneren Strömungsfelder (F1, F2) bilden, welche durch das innere Formteil (2b) voneinander getrennt sind.

5. Bipolarplatte (1) nach Anspruch 4, **dadurch gekennzeichnet, dass** zumindest die äußeren Formteile (2a, 2c) mit Nuten (N) versehen sind, die eine Breite von 0,5 mm bis 3 mm und eine Tiefe von 0,1 mm bis 2 mm aufweisen.

6. Bipolarplatte (1) nach Anspruch 5, **dadurch gekennzeichnet, dass** äußere Strömungskanäle der äußeren Strömungsfelder (F3, F4) durch die Nuten (N) gebildet sind, die auf verschiedenen Wegen die jeweilige Zuführung (3a, 3b) und Abführung (4a, 4b) verbinden.

7. Bipolarplatte (1) nach Anspruch 6, **dadurch gekennzeichnet, dass** innere Strömungskanäle der inneren Strömungsfelder (F1, F2) durch Stege (S) gebildet sind, die links und rechts von der äußeren Nut (N) verlaufen.

8. Bipolarplatte (1) nach einem der vorhergehenden Ansprüche, **dadurch gekennzeichnet, dass** innere Strömungskanäle mäanderförmig, insbesondere erste innere Strömungskanäle eines ersten inneren Strömungsfeldes für ein Reaktionsmedium in einem ersten Mäandermuster und zweite Strömungskanäle dieses oder eines anderen inneren Strömungsfeldes in einem zweiten, entgegengesetzt orientierten Mäandermuster verlaufen.

9. Bipolarplatte (1) nach einem der vorhergehenden Ansprüche, **dadurch gekennzeichnet, dass** beidseitig des inneren Formteils (2b) jeweils zumindest ein oder mehrere, insbesondere zwei oder drei Strömungsfelder (F1, F2, F5, F6) ausgebildet sind.

10. Bipolarplatte (1) nach einem der vorhergehenden Ansprüche 7 bis 9, **dadurch gekennzeichnet, dass** die Anzahl der inneren Strömungsfelder (F1, F2, F5, F6) maximal der doppelten Anzahl der Stege (S) und zwei äußeren Randkanälen (R1, R2) entspricht.

11. Bipolarplatte (1) nach einem der vorhergehenden Ansprüche, **dadurch gekennzeichnet, dass** eine der Anzahl der inneren Strömungsfelder (F1, F2, F5, F6) entsprechende Anzahl von Zuführungen (3d, 3e, 3f, 3g) und Abführungen (4d, 4e, 4f, 4g) vorgesehen sind.

12. Bipolarplatte (1) nach einem der vorhergehenden Ansprüche, **dadurch gekennzeichnet, dass** das innere Formteil (2b) als ein ebenes Metallblech ausgebildet ist, das die beidseitig angeordneten und durch die Prägung der äußeren Formteile (2a, 2c) gebildeten Strömungsfelder (F3, F4) voneinander trennt.

13. Bipolarplatte (1) nach einem der vorhergehenden Ansprüche, **dadurch gekennzeichnet, dass** das innere Formteil (2b) als ein Metallblech ausgebildet ist, das zumindest bereichsweise, insbesondere entlang des Strömungsweges mit Ausnehmungen (7) versehen ist; die die beiden Strömungsfelder (F1, F2) zumindest bereichsweise verbinden.

14. Bipolarplatte (1) nach einem der vorhergehenden Ansprüche, **dadurch gekennzeichnet, dass** das innere Formteil (2b) als ein geprägtes Metallblech ausgebildet ist und die daraus resultierenden, beidseitig des inneren Formteils (2b) gebildeten Strömungsfelder (F1, F2, F5, F6) unterschiedliche Strömungsquerschnitte aufweisen.

15. Bipolarplatte (1) nach einem der vorhergehenden Ansprüche, **dadurch gekennzeichnet, dass** das innere Formteil (2b) mit mehreren Ausnehmungen versehen ist, die als Zuführungen (5a bis 5d) und/oder Abführungen (6a bis 6d) für das Kühlmedium und/oder mindestens ein Reaktionsmedium dienen.

16. Bipolarplatte (1) nach Anspruch 15, **dadurch gekennzeichnet, dass** zumindest einige Ausnehmungen als Zudosierung für mindestens ein äußeres Strömungsfeld (F3, F4) mit dem betreffenden Reaktionsmedium des inneren Strömungsfelds (F5, F6) dienen.

17. Bipolarplatte (1) nach Anspruch 15 oder 16, **dadurch gekennzeichnet, dass** die Ausnehmungen als Schlitze, Löcher, Quadrate, Rechtecke ausgebildet sind.

18. Bipolarplatte (1) nach einem der vorhergehenden Ansprüche, **dadurch gekennzeichnet, dass** für die äußeren Strömungsfelder (F3, F4), insbesondere für die Reaktionsmedien vorgesehene Zuführungen (3a, 3b) und/oder Abführungen (4a, 4b) randseitig und einander gegenüberliegend, insbesondere diagonal einander gegenüberliegend in den Formteilen (2a bis 2c) angeordnet sind.

19. Bipolarplatte (1) nach einem der vorhergehenden Ansprüche, **dadurch gekennzeichnet, dass** für die inneren Strömungsfelder (F1, F2, F5, F6) , insbesondere für das Kühlmedium und/oder für mindestens ein Reaktionsmedium vorgesehene Zuführungen (3c bis 3g) und/oder Abführungen (4c bis 4g) innenseitig und einander gegenüber liegend oder übereinander liegend in den Formteilen (2a bis 2c) angeordnet sind.

20. Bipolarer Brennstoffzellenstapel mit einer Bipolarplatte (1) nach einem der Ansprüche 1 bis 19.

## Claims

1. Bipolar plate (1) for a fuel cell pack which is composed of two outer pre-formed parts (2a, 2c) and one inner pre-formed part (2b) positioned between said outer parts (2a, 2c), the pre-formed parts (2a to 2c) being joined together in such a manner as to form two outer flow fields (F3, F4) and at least two inner flow fields (F1 or F2, F5, F6), the inner flow fields (F1 or F2, F5, F6) being separated from one another in a medium-tight manner and at least one of the inner flow fields (F5, F6) being connected to one of the outer flow fields (F3, F4) for a reaction medium, and the other inner flow field (F1 or F2) being configured on one or both sides of the inner pre-formed part (2b) for a cooling medium.

2. Bipolar plate (1) in accordance with claim 1,
**characterised in that**
at least two inlets (3b to 3g) and two corresponding outlets (4b to 4g) are provided for the separate, inner flow fields, the inner flow field (F5, F6) connected to one of the outer flow fields (F3, F4) having a plurality of holes, in particular pierced holes, along the flow path.

3. Bipolar plate (1) in accordance with claim 1 or 2,
**characterised in that** there are provided two inlets for supplying (3a, 3b) reaction media, in particular hydrogen and air, and two corresponding outlets (4a, 4b) for discharging the reaction media, in particular hydrogen and air.

4. Bipolar plate (1) in accordance with one of the preceding claims,
**characterised in that**
the pre- formed parts (2a to 2c) are designed as stamped metal parts, the stamping on the exterior of the outer pre-formed parts (2a, 2c) forming a corresponding outer flow field (F3, F4) for reaction media and the negatives of the outer flow fields (F3, F4) forming the inner flow fields (F1, F2) which are separated from one another by the inner pre-formed part (2b).

5. Bipolar plate (1) in accordance with claim 4,
**characterised in that** at least the outer pre-formed parts (2a, 2c) are provided with channels (N) of a width of 0.5 mm to 3 mm and a depth of 0.1 mm to 2 mm.

6. Bipolar plate (1) in accordance with claim 5,
**characterised in that** outer flow channels in the outer flow fields (F3, F4) are formed by the channels (N) which connect the inlets (3 a, 3b) to the outlets (4a, 4b) via various paths.

7. Bipolar plate (1) in accordance with claim 6,
**characterised in that**
inner flow channels in the inner flow fields (F1, F2) are formed by webs (S) which run to the right and to the left of the outer channel (N).

8. Bipolar plate (1) in accordance with one of the preceding claims,
**characterised in that** inner flow channels run in the manner of meanders, in particular first inner flow channels in a first inner flow field for a reaction medium run in a first meander pattern and second flow channels in this or another inner flow field run in a second meander pattern in the opposite direction.

9. Bipolar plate (1) in accordance with one of the preceding claims,
**characterised in that**
at least one or more, in particular two or three, flow fields (F1, F2, F5, F6) are formed on either side of the inner pre-formed part (2b).

10. Bipolar plate (1) in accordance with one of the preceding claims 7 to 9,
**characterised in that** the number of inner flow fields (F1, F2, F5, F6) corresponds to a maximum of twice the number of webs (S) and two outer edge channels (R1, R2).

11. Bipolar plate (1) in accordance with one of the preceding claims,
**characterised in that**
a number of inlets (3d, 3e, 3f, 3g) and outlets (4d, 4e, 4f, 4g) is provided which corresponds to the number of inner flow fields (F1, F2, F5, F6).

12. Bipolar plate (1) in accordance with one of the preceding claims,
**characterised in that**
the inner pre-formed part (2b) is designed as a flat metal plate which separates the flow fields (F3, F4) from one another, said flow fields (F3, F4) being positioned on either side of said inner pre-formed part (2b) and formed by the stamping of the outer pre-formed parts (2a, 2c).

13. Bipolar plate (1) in accordance with one of the preceding claims,
**characterised in that** the inner pre-formed part (2b) is designed as a metal plate which is provided in certain areas at least, and in particular along the flow path, with recesses (7) which connect the two flow fields (F1, F2) at least in certain areas.

14. Bipolar plate (1) in accordance with one of the preceding claims,
**characterised in that**
the inner pre-formed part (2b) is designed as a stamped metal plate, and the resulting flow fields (F1, F2, F5, F6) positioned on either side of said inner pre-formed part (2b) have different flow cross-sections.

15. Bipolar plate (1) in accordance with one of the preceding claims,
**characterised in that**
the inner pro-formed part (2b) is provided with a plurality of recesses which serve as inlets (5a to 5d) and/or outlets (6a to 6d) for the cooling medium and/or at least one reaction medium.

16. Bipolar plate (1) in accordance with claim 15,
**characterised in that** some of the recesses at lease serve the metered addition of the particular reaction medium of the inner flow field (F5, F6) into at least one outer flow field (F3, F4).

17. Bipolar plate (1) in accordance claim 15 or 16,
**characterised in that**
the recesses are designed as slits, holes, squares, rectangles.

18. Bipolar plate (1) in accordance with one of the preceding claims,
**characterised in that** inlets (3a, 3b) and/or outlets (4a, 4b) provided for the outer flow fields (F3, F4), particularly for the reaction media, are positioned in the pre-formed parts (2a to 2c) at the edges and opposite one another, in particular diagonally opposite one another.

19. Bipolar plate (1) in accordance with one of the preceding claims,
**characterised in that**
inlets (3c to 3g) and/or outlets (4c to 4g) provided for the inner flow fields (F1, F2, F5, F6), in particular for the cooling medium and/or for at least one reaction medium, are positioned in the pre-formed parts (2a to 2c) on the inside and opposite one another or one on top of the other.

20. Bipolar plate fuel cell pack having a bipolar plate (1) in accordance with one of claims 1 to 19.

## Revendications

1. Plaque bipolaire (1) pour un empilement de cellules à combustible qui est composée de deux pièces moulées extérieures (2a, 2c) et d'une pièce moulée intérieure (2b) disposée entre ces pièces moulées extérieures, où les pièces moulées (2a à 2c) sont assemblées entre elles, de manière telle que soient formés deux champs d'écoulement extérieurs (F3, F4) et au moins deux champs d'écoulement intérieurs (F1 ou F2, F5, F6), où les champs d'écoulement intérieurs (F1 ou F2, F5, F6) sont séparés l'un de l'autre en étant étanches par rapport aux milieux, et au moins l'un des champs d'écoulement intérieurs (F5, F6) est relié à l'un des champs d'écoulement extérieurs (F3, F4) prévu pour un milieu réactionnel, et l'autre champ d'écoulement intérieur (F1 ou F2) est conçu pour un milieu de refroidissement sur un côté ou sur les deux côtés de la pièce moulée intérieure (2b).

2. Plaque bipolaire (1) selon la revendication 1, **caractérisée en ce qu'**il est prévu au moins deux arrivées (3b à 3g) et deux évacuations correspondantes (4b à 4g) pour les champs d'écoulement intérieurs séparés l'un de l'autre, où le champ d'écoulement intérieur (F5, F6) relié à l'un des champs d'écoulement extérieurs (F3, F4) présente, le long de la trajectoire d'écoulement, plusieurs ouvertures, en particulier des perçages.

3. Plaque bipolaire (1) selon la revendication 1 ou 2, **caractérisée en ce qu'**il est prévu deux arrivées (3a, 3b) servant à fournir des milieux réactionnels, en particulier de l'hydrogène et de l'air, et deux évacuations correspondantes (4a, 4b) servant à évacuer des milieux réactionnels, en particulier de l'hydrogène et de l'air.

4. Plaque bipolaire (1) selon l'une quelconque des revendications précédentes, **caractérisée en ce que** les pièces moulées (2a à 2c) sont configurées comme des pièces métalliques gaufrées, où le gaufrage des pièces moulées extérieures (2a, 2c) réalisé sur le côté extérieur respectif forme un champ d'écoulement extérieur associé (F3, F4) pour des milieux réactionnels, et les négatifs respectifs des champs d'écoulement extérieurs (F3, F4) forment les champs d'écoulement intérieurs (F1, F2) qui sont séparés l'un de l'autre par la pièce moulée intérieure (2b).

5. Plaque bipolaire (1) selon la revendication 4, **caractérisée en ce qu'**au moins les pièces moulées extérieures (2a, 2c) sont dotées de rainures (N) qui présentent une largeur de 0,5 mm à 3 mm et une profondeur de 0,1 mm à 2 mm.

6. Plaque bipolaire (1) selon la revendication 5, **caractérisée en ce que** des canaux d'écoulement des champs d'écoulement extérieurs (F3, F4) sont formés par les rainures (N) qui, par des voies différentes, relient l'arrivée (3a, 3b) et l'évacuation (4a, 4b) respectives.

7. Plaque bipolaire (1) selon la revendication 6, **caractérisée en ce que** des canaux d'écoulement intérieurs des champs d'écoulement intérieurs (F1, F2) sont formés par des parties pleines (S) qui s'étendent à gauche et à droite de la rainure extérieure (N).

8. Plaque bipolaire (1) selon l'une quelconque des revendications précédentes, **caractérisée en ce que** des canaux d'écoulement intérieurs s'étendent en forme de méandres, en particulier des premiers canaux d'écoulement intérieurs d'un premier champ d'écoulement intérieur prévu pour un milieu réactionnel s'étendent dans un premier type de méandres, et des deuxièmes canaux d'écoulement de ce champ d'écoulement ou d'un autre champ d'écoulement intérieur s'étendent dans un deuxième type de méandres orienté en sens inverse.

9. Plaque bipolaire (1) selon l'une quelconque des revendications précédentes, **caractérisée en ce qu'**au moins un ou plusieurs, en particulier deux ou trois champs d'écoulement (F1, F2, F5, F6), sont configurés à chaque fois des deux côtés de la pièce moulée intérieure (2b).

10. Plaque bipolaire (1) selon l'une quelconque des revendications 7 à 9, **caractérisée en ce que** le nombre de champs d'écoulement intérieurs (F1, F2, F5, F6) correspond au maximum au double du nombre de parties pleines (S) et à deux canaux de bordure extérieurs (R1, R2).

11. Plaque bipolaire (1) selon l'une quelconque des revendications précédentes, **caractérisée en ce qu'**il est prévu un nombre d'arrivées (3d, 3e, 3f, 3g) et d'évacuations (4d, 4e, 4f, 4g) correspondant au nombre de champs d'écoulement intérieurs (F1, F2, F5, F6).

12. Plaque bipolaire (1) selon l'une quelconque des revendications précédentes, **caractérisée en ce que** la pièce moulée intérieure (2b) est configurée comme une tôle métallique plane qui sépare, l'un de l'autre, les champs d'écoulement (F3, F4) disposés des deux côtés et formés par le gaufrage des pièces moulées extérieures (2a, 2c).

13. Plaque bipolaire (1) selon l'une quelconque des revendications précédentes, **caractérisée en ce que** la pièce moulée intérieure (2b) est configurée comme une tôle métallique qui est dotée, au moins par zones, en particulier le long du trajet d'écoulement, de creux (7) qui relient, au moins par zones, les deux champs d'écoulement (F1, F2).

14. Plaque bipolaire (1) selon l'une quelconque des revendications précédentes, **caractérisée en ce que** la pièce moulée intérieure (2b) est configurée comme une tôle métallique gaufrée, et les champs d'écoulement (F1, F2, F5, F6) en résultant et formés des deux côtés de la pièce moulée intérieure (2b) présentent des sections d'écoulement différentes.

15. Plaque bipolaire (1) selon l'une quelconque des revendications précédentes, **caractérisée en ce que** la pièce moulée intérieure (2b) est dotée de plusieurs creux qui servent d'arrivées (5a à 5d) et / ou d'évacuations (6a à 6d) pour le milieu de refroidissement et / ou pour au moins un milieu réactionnel.

16. Plaque bipolaire (1) selon la revendication 15, **caractérisée en ce qu'**au moins quelques creux servent de dosage supplémentaire pour au moins un champ d'écoulement extérieur (F3, F4) avec le milieu réactionnel, concerné, du champ d'écoulement intérieur (F5, F6).

17. Plaque bipolaire (1) selon la revendication 15 ou 16, **caractérisée en ce que** les creux sont configurés comme des fentes, des trous, des carrés, des rectangles.

18. Plaque bipolaire (1) selon l'une quelconque des revendications précédentes, **caractérisée en ce que** des arrivées (3a, 3b) et / ou des évacuations (4a, 4b) prévues pour les champs d'écoulement extérieurs (F3, F4), en particulier pour les milieux réactionnels, sont disposées, dans les pièces moulées (2a à 2c), en bordure et à l'opposé les unes des autres, en particulier à l'opposé les unes des autres et en diagonale.

19. Plaque bipolaire (1) selon l'une quelconque des revendications précédentes, **caractérisée en ce que** des arrivées (3c à 3g) et / ou des évacuations (4c à 4g) prévues pour les champs d'écoulement intérieurs (F1, F2, F5, F6), en particulier pour le milieu de refroidissement et / ou pour au moins un milieu réactionnel, sont disposées, dans les pièces moulées (2a à 2c), à l'intérieur et à l'opposé les unes des autres, ou bien en étant superposées.

20. Empilement bipolaire de cellules à combustible comprenant une plaque bipolaire (1) selon l'une quelconque des revendications 1 à 19.
